# EUROPEAN PATENT APPLICATION

(11) **EP 0 857 682 A2**
(43) Date of publication of application: **12.08.1998**
(21) Application number: 98101089.5
(22) Date of filing: 22.01.1998
(51) Int. Cl.: B65H 57/26, B65H 54/70, F16F 7/108, F16F 15/08

(54) **Long rod reciprocating apparatus**

(30) Priority: 07.02.1997 JP 24647/97; 10.02.1997 JP 26581/97
(71) Applicant: Murata Kikai Kabushiki Kaisha, Minami-ku, Kyoto-shi, Kyoto 601 (JP)
(72) Inventor: Miyagawa, Takashi, Kizu-cho, Soraku-gun, Kyoto (JP); Ogata, Takanori, Takatsuki-shi, Osaka (JP)
(74) Representative: Liedl, Christine, Dipl.-Chem.

(57) **Abstract**

In order to suppress vibration specific to a long rod reciprocating apparatus such as a traverse device, the apparatus of the present invention is provided with a vibration suppressing means 17 that suppresses vibrations in the reciprocating direction. Ideally, this vibration suppressing means 17 is a dynamic vibration absorber comprising a visco-elastic body 17a that expands and contracts in the reciprocating direction and a weight 17b attached to this visco-elastic body 17a. This dynamic vibration absorber should be distributed and housed in the free-end section A1 located at the far end of the long rod that has a hollow, as a pipe does.

## Description

### Field of the Invention

The present invention relates to an apparatus for reciprocating a long rod in the axial direction, for example, a long rod reciprocating apparatus used as a traverse device for traversing a long rod that has a number of yarn guides to form several packages at a time, more specifically, to an apparatus for reciprocating a long rod capable of suppressing vibrations generated in the reciprocating motion of the long rod in the longitudinal direction and capable of keeping the lubricating oil contained in the cam device from overheating.

### Background of the Invention

Each of the above-mentioned reciprocating apparatuses is used as a simultaneous traverse device for winding machine in a textile processing machine equipped with many processing units.

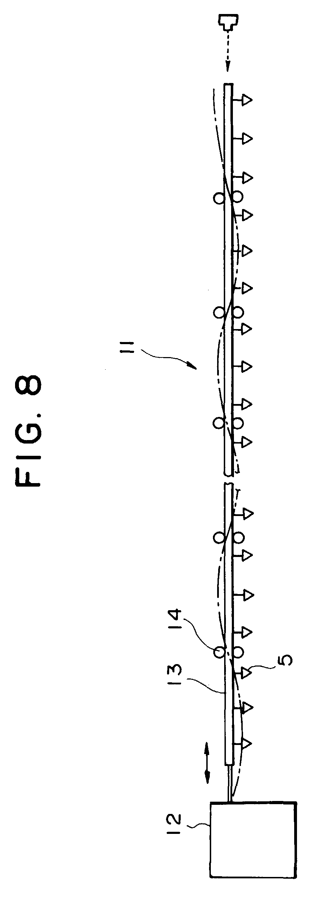

This traverse device, shown in Figure 8, works so that many packages are formed at a time by reciprocating a traverse rod 13 connected to a cam box 12 and provided with many yarn guides 5 at specified pitches, and so that the yarns are traversed. When many processing units called "unit" are used, the traverse rod 13 must be extended correspondingly further. Thus, guides 14 are provided on the traverse rod 13 at proper pitches.

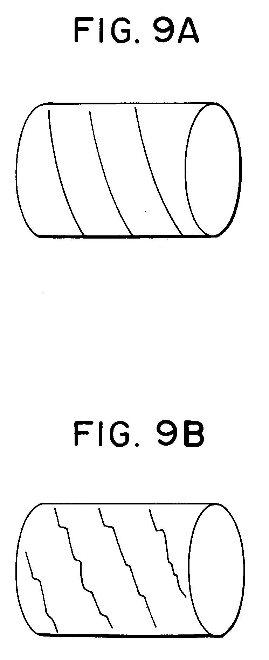

In such a traverse device, when the traverse rod 13 reverses, an impact similar to a collision is transmitted to the traverse rod 13, which results in horizontal string vibration (hereinafter referred to as "transverse vibration") at each guide 14 working as a fulcrum. The package on the base end of the traverse rod 13 remains comparatively undisturbed, as shown in Figure 9A, but the package on the far end of the traverse rod 13 contains numerous notches, as shown in Figure 9B. This is because strains resulting from the vibrations accumulate in the package, making it impossible to form uniform packages.

To reduce this shock on the traverse rod 13 when it reverses, the traverse rod 13 is formed as an FRP molded carbon rod, using light and rigid carbon fiber. The yarn guides 5 are made of light plastic. In addition, a coat of a visco-elastic material composed mainly extremely flexible rubber is applied to the inner surface of the traverse rod 13 having a hllow. The final effect is to reduce transverse vibrations, as shown in Figure 8.

As a traverse device used for a yarn winding machine, there is a traverse device using a cylindrical cam device. The traverse device fixes a slider to a cam follower that fits in a cam grave of a cam drum, with the slider sliding along the slider shift. In order to reciprocate the slider, the cam drum is driven by a motor and the necessary reciprocating force is produced from a traverse rod linked to this slider.

In the prior art, a traverse device retains lubricating oil at the bottom of the cam box housing the cam device to lubricate the movable members. Part of the cam drum is formed so as to contact the lubricating oil and the traverse device is provided with a means of supplying the lubricating oil to the surface of the slider shaft.

When a traverse device suppresses transverse vibrations with a visco-elastic material coated on the inner surface of the traverse rod, it is possible to eliminate notches, as shown in Figure 9B, from packages functioning at the normal traverse speed of 200 reciprocating motions/min or speeds somewhat faster. However, textile processing machines developed in recent years are capable of accommodating higher speeds and when traverse speed exceeds 400 reciprocating motions/min more than double normal speed, the notches again appear on the packages, as shown in Figure 9B.

The traverse device also creates another problem, that is noise, due primarily to the friction between the reciprocating slider and the slider shaft, but also to the impact of the cam drum with the cam follower. The slider and cam follower periodically reverse in their reciprocating motion, a movement that involves abrupt acceleration and often results in a loud noise.

Conventionally, the function of the lubricating oil which is supplied to the surfaces of the slider shaft and cam drum is to reduce such friction and to reduce the force of impact that occurs when the cam follower strikes the cam drum in the cam groove, and thus to reduce noise.

But in some cases, the traverse device found in the prior art will become gradually louder after operation begins.

The first objective of the present invention is to suppress vibration specific to such a long rod reciprocating apparatus used as a traverse device, making use of knowledge obtained from analyzing the phenomena that generates such vibrations.

The present inventor has found that the main cause of increasing noise level in the prior art traverse device is viscosity degradation of the lubricating oil by friction between the slider and the slider shaft in the reciprocating motion of the slider and by rising temperatures caused by the cam drum striking the cam follower in the cam groove.

Thus, the second objective of this invention is to suppress the noise generated by the traverse device, using information determined from a careful analysis.

### Summary of the Invention

In order to achieve the first objective, the long rod reciprocating apparatus of the present invention has a vibration suppressing means functioning in the reciprocating direction of the log rod, in order to suppress vibrations in the reciprocating direction.

As shown in Figure 8, it has come to be thought that transverse vibrations are the most significant type of vibration generated in the reciprocating long rod. It is thought that the longitudinal vibration caused by this transverse vibration creates the notches that appear on the packages, shown in Figure 9B. However, the results of measures taken to reduce such transverse vibration in the long rod have been disappointing. In a study seeking to understand why such notches cannot be eliminated completely, an analysis of the vibrations of the long rod showed that longitudinal vibration at a specific frequency is the most significant factor, according to the circumstances affecting the long rod.

It was also found that this longitudinal vibration excited transverse vibration between guides 14, as shown in Figure 8. In summary, it was found that such vibration could be completely suppressed by suppressing the longitudinal vibration arising from the expansion and contraction of the long rod in the longitudinal (axial) direction. This was confirmed by tests of the present invention.

The present invention is a reciprocating apparatus that drives a long rod to create reciprocating motion, provided with a vibration suppressing means working in the reciprocating direction of the long rod to suppress vibration in the reciprocating direction. The vibration suppressing means that works in the reciprocating direction is most effective for vibration caused by expansion and contraction of the long rod in the reciprocating direction.

The present invention is a dynamic vibration absorber used as a vibration suppressing means as mentioned above, comprising a visco-elastic body expanding and contracting in the reciprocating direction, and a weight attached to this visco-elastic body. By appropriately setting the spring constant, the damping coefficient, or the weight mass, it is possible to negate the natural longitudinal frequency depending on the longitudinal elasticity modulus, cross section, and length and weight of the traverse rod regardless of the reciprocating speed.

The present invention is a hollow pipe used as a long rod in the above mentioned features. The vibration suppressing means described above is housed in this pipe, so that the vibration suppressing means is completely hidden within it.

The present invention is the vibration suppressing means separated into two or more parts and housed in the hollow pipe. The separate individual vibration suppressing means can be distributed in a thin hollow pipe to avoid overloading.

The present invention is the vibration suppressing means attached to a joint member in joint of the long rod. The vibration suppressing means can be attached when the joints are connected to the long rod.

The present invention is the vibration suppressing means, attached in the free-end section provided at the far end of the long rod. When attached in the free-end section at the far end, the vibration suppressing means effectively work for the entire long rod. The positioning also facilitates maintenance work, including replacement of vibration suppressing means.

The present invention is the traverse device wherein the reciprocating apparatus for reciprocating the long rod whose base end is connected to the cam box, with the long rod that has a number of yarn guides, so that the traverse device can form a number of packages at a time. Such a reciprocating apparatus is effective for the traverse device for simultaneous winding used for a textile processing machine that has several processing units.

In order to achieve the second objective, the present invention provides the long rod reciprocating apparatus with a means of preventing overheating of the lubricating oil circulating in the cam box housing the cam unit. The cam box comprises a cam drum, a cam follower engaged with the cam drum and a slider attached to the cam follower, wherein the slider is connected to a long rod that has a number of yarn guides and the cam drum rotates to reciprocate the slider along a slider shaft and to reciprocate the long rod.

The present invention has a cooling means for lubricating oil that comes into contact with the slider shaft.

The present invention forms the cooling means that flows the cooling fluid through the inside of slider shaft.

The present invention is a long rod reciprocating apparatus provided with yarn guides, each of which comprises a resin-molded supporting member and a yarn guide member formed as a single body with the supporting member. The reciprocating apparatus reciprocates the long rod that has a number of yarn guides for a simultaneous traverse of yarns.

In the present invention, to reduce weight, the supporting member is molded from resin, and the yarn guide member is formed as a single body with the supporting member to maintain the fixing strength of the yarn guide member even when the yarn guide is small and secured across a small surface area.

The present invention molds together both the yarn guide member and the supporting member by embedding part of the yarn guide member in the supporting member, and provides the embedded portion of the yarn guide member with a resistance part that prevents the yarn guide member from separating from the supporting member.

In the present invention, the separation resistance part provides resistance to prevent the yarn guide member from separating from the supporting member.

The present invention adds to polyamide resin the ABS resin used as material for the supporting member.

In the present invention, the function of the ABS resin is to improve adherence with the traverse rod and the function of the polyamide resin is to prevent degradation of the ABS resin, such as cracking.

### Brief Description of the Drawings

Figure 1 shows the structure of the major portion of the long rod reciprocating apparatus in the first embodiment of the present invention.

Figure 2 is a partial cross-sectional view of the long rod reciprocating apparatus when a dynamic vibration absorber is used.

Figure 3 is a partial cross-sectional view of the long rod reciprocating apparatus when an impact-type dynamic vibration absorber is used.

Figure 4 is a typical view of the arrangement of devices when the apparatus of the present invention is used in a traverse device of an innovative spinning machine.

Figure 5 is a graph indicating the changes of the vibrational force applied to the base end of the traverse rod.

Figure 6 is a graph indicating the changes of the displacement of the far end of the traverse rod.

Figure 7 is a graph indicating the displacement of the far end of the traverse rod when the constant of the dynamic absorber is changed.

Figure 8 is a typical view of the traverse device used as a long rod reciprocating apparatus.

Figure 9 is packages produced by the traverse device.

Figure 10 is a perspective view of the traverse device in another embodiment of the present invention.

Figure 11 is a front cross-sectional view of the traverse device shown in Figure 10.

Figure 12 is a side cross-sectional view of the traverse device shown in Figure 10.

Figure 13 is a plane cross-sectional view of the traverse device shown in Figure 10.

Figure 14 is an outlined perspective view of the yarn guide of the long rod reciprocating apparatus in another embodiment of the present embodiment.

Figure 15 is a cross-sectional view of the yarn guide member of the yarn guide shown in Figure 14.

Figure 16 is a side view of both the yarn guide and the winding unit shown in Figure 14, indicating their relationship.

Figure 17 is an outlined perspective view of the traverse mechanism provided with the yarn guide shown in Figure 14.

### Detailed Description of the preferred embodiments

In the following, an embodiment of the present invention will be described, with reference to the attached drawings.

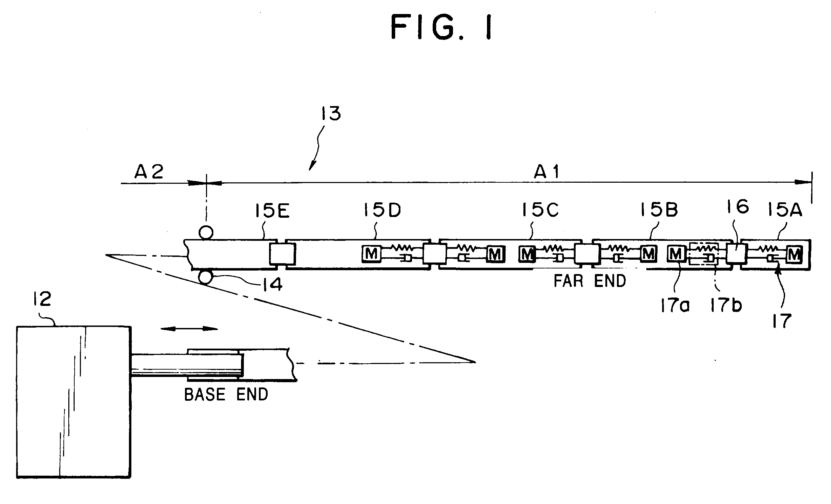

Figure 1 shows the structure of the major portion of the long rod reciprocating apparatus in the first embodiment of the present invention. The long rod reciprocating apparatus is the same one used in the traverse device shown in Figure 8.

The traverse rod 13 comprises a free-end section A1 formed beyond guides 14 and a section A2 guided by the guides 14, extending to the base end of a cam box 12. The free-end section A1 comprises the first short rod 15A, the second short rod 15B, the third short rod 15C and the fourth short rod 15D which are connected sequentially with a joint member 16. The total length of A1 is about 1m. The section A2 that extends to the base end of the cam box 12 is the rod 15E having a specified length and is also connected by the joint member 16.

Each of the short rods 15A to 15E is formed by a FRP pipes containing carbon fibers and is very light and strong. Each of the short rods 15A to 15D of the free-end section A1 are cut to have sufficient length to house a dynamic vibration absorber 17 having a function as a vibration suppressing means in its hollow portion. The dynamic vibration absorber 17 functions to suppress vibrations. The illustrated dynamic vibration absorber 17 is a dynamic absorber type having a visco-elastic body 17a that expands and contracts in the reciprocating direction and a weight 17b attached to one end of this visco-elastic body 17a. The visco-elastic body 17a that expands and contracts in the reciprocating direction and the weight 17b function together as a vibration suppressing device to absorb and reduce the vibrations caused by the expansion and contraction of the traverse rod 13 in the reciprocating direction (longitudinal direction).

A pair of such dynamic vibration absorbers 17 are attached to both sides of each joint member 16. One dynamic vibration absorber 17 is housed in the short rod 15A and two dynamic vibration absorbers 17 are housed in the short rod 15B, 15C, respectively and one dynamic vibration absorber 17 is housed in the short rod 15D. A total of six dynamic vibration absorbers 17 are housed in the free-end section A1 for proper distribution in the reciprocating direction. This distribution of the dynamic vibration absorbers 17 is very effective in reducing the load of each dynamic vibration absorber 17 so that the heating value of visco-elastic body 17a can be reduced further than in the case in which the A1 section is provided with only one dynamic vibration absorber 17. The dynamic vibration absorbers 17 should be provided beyond the center of traverse rod 13 in the axial direction on the free-end side (the opposite side of the cam box 12). However, when the dynamic vibration absorbers 17 are provided in the free-end section A1 that most expands and contracts, the longitudinal vibration of the whole traverse rod 13 can be absorbed.

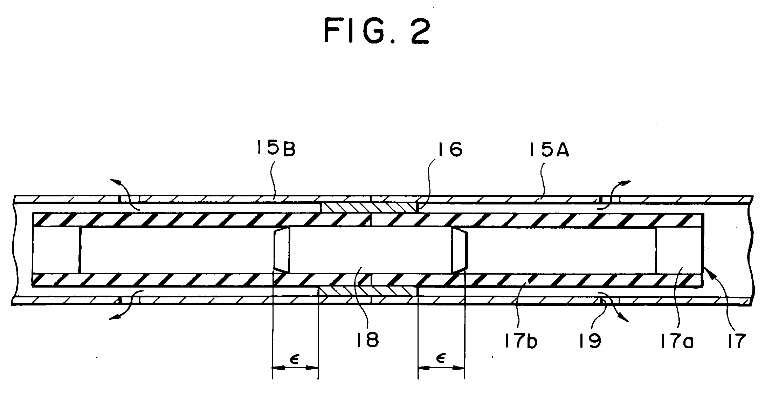

Figure 2 shows the details of the procedures for attaching the dynamic-type vibration absorber 17. The visco-elastic body 17a has a simple structure, it is a rubber tube cut to a specified length. An aluminum core bar 18 is inserted and bonded into center of a pair of rubber tubes joining together and arranged back-to-back and they are then bonded to the core bar 18. A short cylindrical weight 17b is inserted and bonded to the end of each rubber tube 17a. In this way, a pair of dynamic vibration absorbers 17 are formed back-to-back in the core bar 18. The joint member 16 is capped and bonded on the outer periphery of the rubber tube 17a of the core bar 18 located in the center portion between this pair of dynamic vibration absorbers 17. Thus, the joint member 16 is not easily separated. The joint member 16 connects the joints of the short rods 15A and 15B. When these short rods 15A and 15B are connected, a pair of dynamic vibration absorbers 17 are sealed and fixed in the hollow pipe.

In this case, the core bar 18 is longer than the joint member 16, so that the core bar 18 projects by a distance ε and the tip of the core bar 18 tapers. This structure of the core bar 18 prevents rubber tube 17a from expanding and contracting from local loading.

In addition, each of the short rods 15A and 15B in which the rubber tubes 17a are located is provided with an air hole 19 to discharge the air heated by the rubber tube 17a as it absorbs vibrations. The rubber tube 17a is fixed to the core bar 18 at a distance from the core bar 18 and the tube 17a can expand and contract visco-elastically in the reciprocating direction without touching the inner surface of the short rods 15A and 15B, significantly improving the durability of the rubber tube 17a.

The dynamic-type vibration absorber 17 can be optimized, using the mass of the weight 17b, the elastic constant and dumping coefficient of the rubber tube 17a which functions as a visco-elastic body. The traverse rod's natural longitudinal frequency depends on the longitudinal elasticity coefficient (Young's modulus), cross section, length and weight and is independent of the reciprocating speed. Thus, the dynamic vibration absorber 17 can be optimized with the above three parameters to eliminate longitudinal vibration.

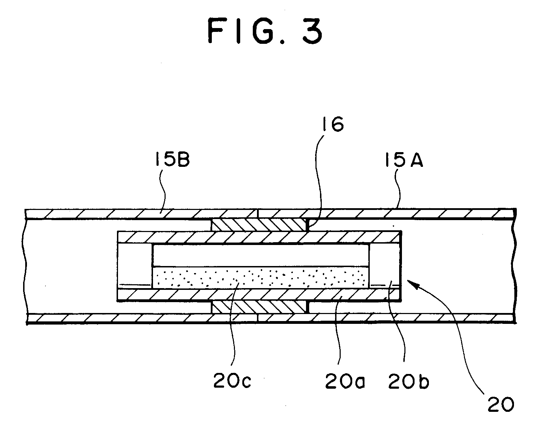

Figure 3 shows the details for attachment of an impact-type dynamic vibration absorber 20.

A short cylindrical weight 20b is inserted and fixed at both sides of cylindrical part 20a, forming a hollow container. This hollow portion is sealed with a fluid material 20c such as sand or water. This forms an impact-type dynamic vibration absorber 20. This dynamic vibration absorber 20 is also connected to the joint part of each of the short rods 15A and 15B via a joint member 16 in the center. When the fluid material 20c in the hollow portion of the dynamic vibration absorber 20 moves in the reciprocating direction to repeatedly strike the weight 20b, it functions as a vibration suppressing means working in the reciprocating direction.

The impact-type dynamic vibration absorber 20 can be optimized by using as parameters the mass of the weight 20b, the restitution coefficient of fluid material 20c and the reciprocating pitch in the hollow portion of dynamic vibration absorber 20. However, use of sand as fluid material 20c in the impact-type dynamic vibration absorber 20 tends to generate much noise. Using water as fluid material 20c can lead to leaks. To avoid such problems, the dynamic vibration absorber 17 should be used.

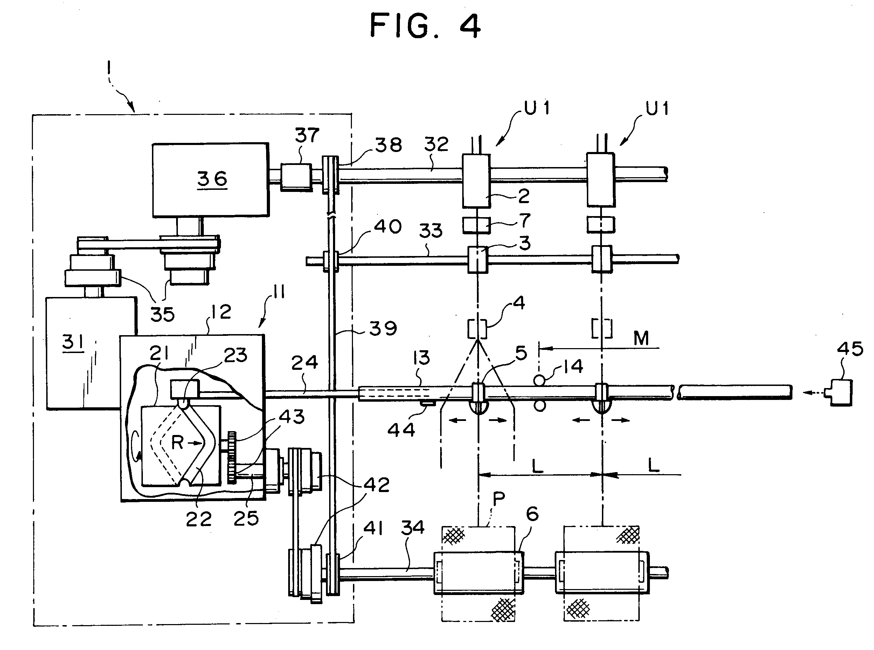

Figure 4 shows how devices are arranged when the apparatus of the present invention is used as a traverse device in an innovative spinning machine. This innovative spinning machine is an air-jet spinning type used to twist a sliver, a collection of short fiber, into a fastened spun yarn, eliminating yarn defects and forming yarn into packages.

This innovative spinning machine comprises spinning units U1, U2, ... , lined up on the side of drive end 1. The total number of spinning units U to be lined up is about 72 units. Each spinning unit U comprises a draft device 2, a twisting device 7, a feed roller 3, a yarn clearer 4, a reciprocating yarn guide 5 and a friction roller 6 with which a package P comes in contact, that are arranged upstream to downstream. The devices 2, 3, 5 and 6 provided in each spinning unit U are driven together by a drive meanism provided in the drive end 1.

In particular, the traverse device 11 used for simultaneous winding of yarns comprises a cam box 12 provided in the drive end 1, a rod 13, guides 14 and yarn guides 5. In short, the common cam box 12 can reciprocate the yarn guides 5 for all spinning units U1, U2, ... together. Thus, the rod 13 may be as long as 16m, even for one with 72 units.

In the cam box 12, a cam drum 21 is supported by a shaft in a way that permits free rotation. This cam drum 21 is provided with a spiral groove 22 for reciprocal movement. A shoe 23 fitted in the spiral groove 22 makes reciprocal movements, together with rotating the cam drum 21 in the right-left direction. The reciprocal movement of the shoe 23 is transmitted to an output shaft 24 supported so as to slide freely. The tip of the output shaft 24 is connected to the traverse rod 13. Additionally, the traverse rod 13 is supported by a pair of the guides 14 to permit reciprocal movement. The arrangement pitch of the pair of the guides 14 is greater than the fixing pitch L of the yarn guides 5.

The above output shaft 24 comprises a hollow aluminum pipe and the traverse rod 13 comprises a hollow carbon pipe, both compositions chosen to reduce weight. Normally, the traverse rod 13 is somewhat shorter than 2m for manufacturing reasons, so short rods are connected with joints or sleeves (not shown in the drawings) to extend the rod to a length of up to 16m. The traverse rod 13 and output shaft 24 are connected by inserting the output shaft 24 in the traverse rod 13.

The drive end 1 rotates the first, second and third shafts 32, 33, and 34 using one motor 31 to reciprocate the traverse rod 13. The motor 31 rotates the first shaft 32 used for the draft device 2 via a pair of three-step pulleys 35, a reduction gear 36 and a coupling 37. The spinning speed can be changed in three steps by adjusting the step of three-step pulleys 35. A pulley 40 engaged with the second shaft 33 for the feed roller 3 is rotated by a belt 39 applied to a pulley 38 engaged with the first shaft 32. The pulley 41 that is engaged with the third shaft 34 for a friction roller 6 is rotated by the rotation of pulley 40. Then, the three-step pulley 42 engaged with one end of the third shaft 34 is rotated to rotate an input shaft 25 of cam box 12. The input shaft 25 rotates the cam drum 21 via a pair of gears 43. Then, as explained above, the output shaft 24 is reciprocated via the shoe 23. The winding angle of package P can be changed by changing the step of the three-step pulley 42. On example is the driving mechanism of the above drive end, which permits many variations. A gear may be used instead of a pulley, for example.

The R of the turning portion of the reciprocating spiral groove 22 should be as small as possible to prevent the package from saddle bagging. R, for example, can be reduced to 25mm. Consequently, an shock caused by a rapid speed change is applied to both ends of the reciprocating motion of the traverse rod 13. However, as explained in Figures 1 to 3, when a dynamic vibration absorber working in the reciprocating direction of the traverse rod 13 is provided, longitudinal vibrations can be suppressed. As a result, transverse vibrations are also suppressed.

In the above embodiment, a traverse device is adopted as a long rod reciprocating apparatus. The traverse device is used for a simultaneous winding for textile processing machine. However, the traverse device may be any mechanism, such as a traverse rod 13, if it can reciprocate such a long rod.

The following is a description of a test example that uses a long rod reciprocating apparatus.

In the test, a traverse device as shown in Figure 4 is used. The reciprocating motion of the cam box 12 is set to 450 double strokes/min. The traverse rod 13 is 20 mm in exterior diameter and 16m in length. The traverse device incorporating six separated dynamic vibration absorbers in its free-end section of approximately one meter, as shown in Figure 1, is compared with another traverse device incorporating no dynamic vibration absorber. A strain gauge 44 is attached to the base end of the traverse rod 13 to measure the vibrational force to be detected on the base end. A distance sensor 45 is also provided at the far end of the traverse rod 13 to measure the displacement of the reciprocating direction (longitudinal direction).

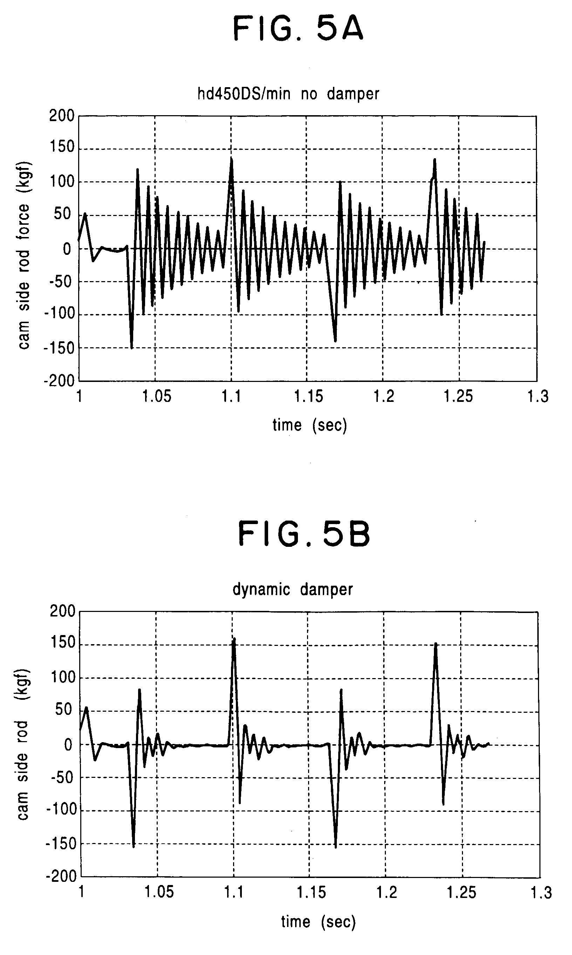

Figure 5 shows variations of the vibrational force applied to the base end of the traverse rod 13.

As shown in Figure 5A, when no dynamic vibration absorber is used, the next turn is reached before the vibrational force of the current turn is reduced. Thus, the vibrational force works continuously. The shoe 23 shown in Figure 4 strikes the side wall of reciprocating spiral groove 22 and weaves its way along it. As a result, the traverse device generates a great deal of noise from the impact of the reciprocating motion and the shoe 23 is quickly worn out. But if dynamic vibration absorbers are used as shown in Figure 5B, the vibrational force is generated at the start of each turn, but its force is immediately reduced. The traverse device generates less noise in the reciprocating motion and the working life of the shoe 23 is significantly extended.

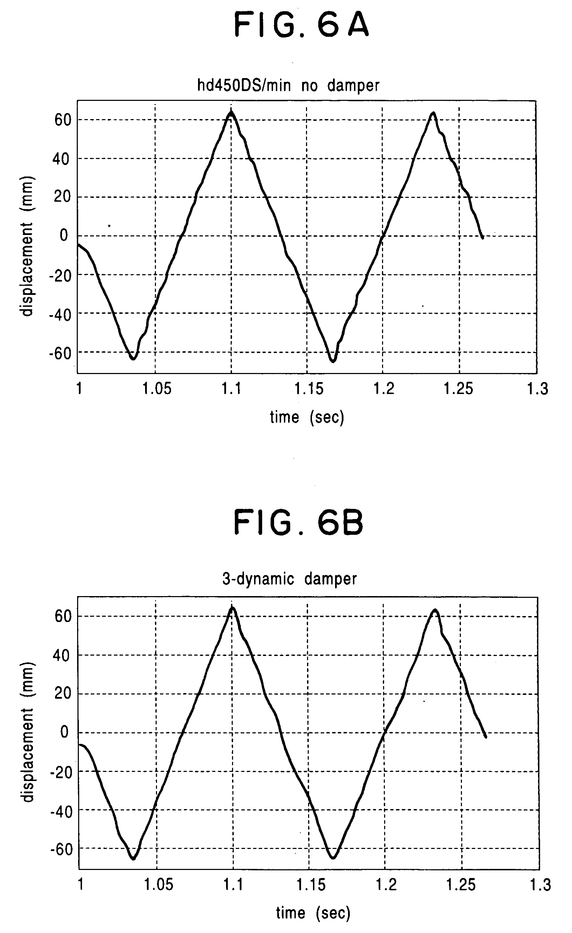

Figure 6 shows the displacement of the far end of the traverse rod 13. When no dynamic vibration absorber is used as shown in Figure 6A, the longitudinal vibration to be generated at each turn is reduced before the next turn is reached, but the vibration itself is unaffected. Thus, the package becomes as shown in Figure 9B. When the dynamic vibration absorbers are used as shown in Figure 6B, the longitudinal vibration to be generated at each turn is detected only as a first wave, after which vibration is rapidly reduced, smoothing the reciprocating motion of the traverse rod 13.

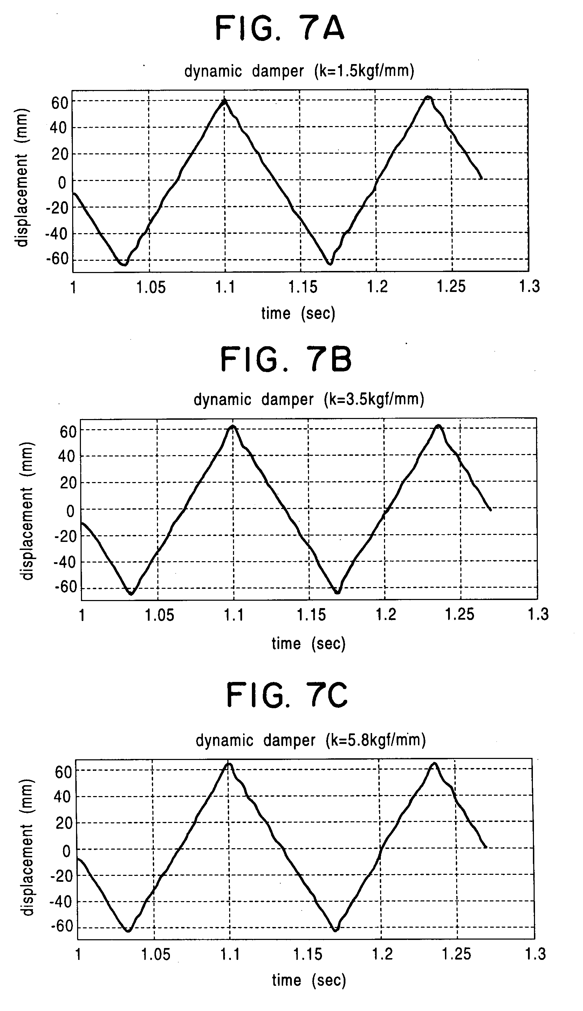

Figure 7 shows an example in which dynamic-type vibration absorbers are used and the spring constant is changed. Figure 7A shows a case in which the spring constant is too low, with longitudinal vibration at each turn persisting to the third wave. Figure 7B shows a case in which the spring constant is appropriate and the longitudinal vibration at each turn ends with the first wave. Figure 7C shows a case in which the spring constant is too large, with longitudinal vibration at each turn persisting to the fourth wave. When dynamic-type vibration absorbers are used in this way, it becomes possible to eliminate the natural longitudinal frequency that depends on the longitudinal elasticity modulus, cross section, length and the weight of the long rod, by properly setting the spring constant, the dumping coefficient of the visco-elastic body or the mass of the weight.

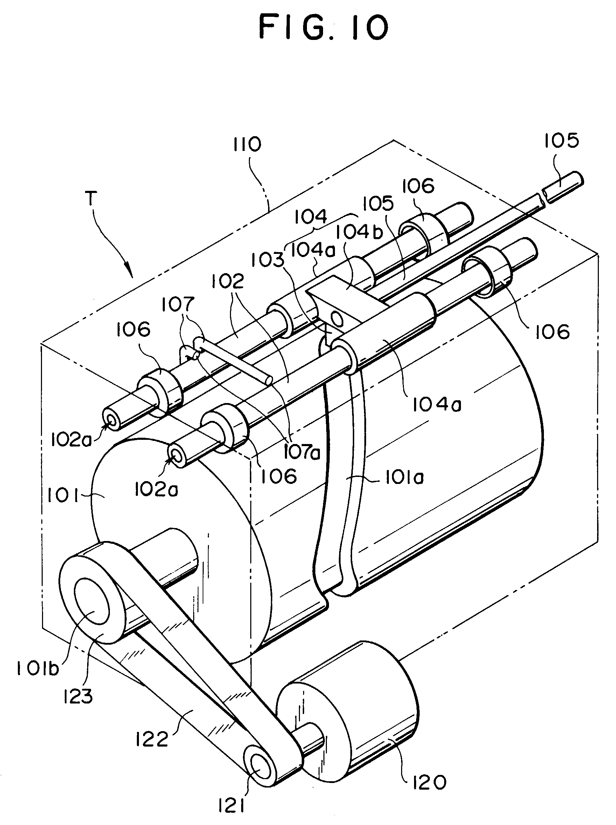

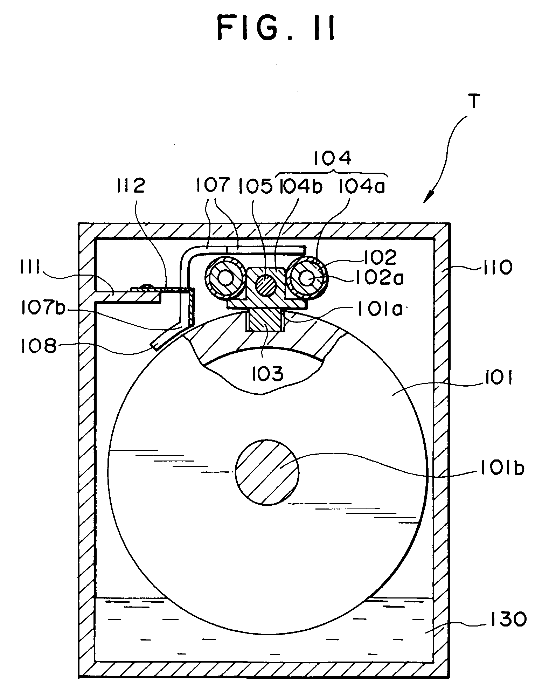

Another embodiment of the traverse device T is described below, with reference to Figures 10 to 13.

This traverse device T comprises a cam device comprising a cylindrical cam drum 101, a cam follower 103 fitted into the cam groove 101a engraved into the peripheral surface of cam drum 101, a slider 104 provided with this cam follower 103 and slider shafts 102, 102 that guides the reciprocating motion of the slider 104. The cam device is housed in a cam box 110.

The slider 104 comprises sliding cylinders 104a, 104a fitted from outside to the two slider shafts 102 arranged parallel to each other in a way permitting free sliding and a block 104b linking the sliding cylinders 104a, 104a. On the bottom surface of the block 104b, the cam follower 103 is joined to the block 104b. To this block 104b, a slider rod 105 is linked to extend in one direction of the reciprocating motion of the slider 104. The slider rod 105 transmits the reciprocating motion of the slider 104 to drive an external device.

A driving transmitter such as a belt 122 is applied between a pulley 123 fitted to a rotary shaft 101b of the cam drum 101 and a driving shaft 121 of a motor 120, so that the cam drum 101 is driven by the motor 120.

When the cam drum 101 is driven by the motor 120, the cam follower 103 fitted in the cam groove 101a engraved into the peripheral surface of the cam drum 101 moves along the cam groove 101a so that the slider 104, joined to the cam follower 103, makes reciprocating motions along the slider shafts 102. That is, the rotational force of such as the motor 120 is transmitted to an external device via the slider rod 105 linked to the slider 104 as reciprocating motions.

Lubrication oil 130 is contained at the bottom of the cam box 110 that houses the cam device. Part of the cam drum 101 comes in contact with the lubrication oil 130, so that when the cam drum 101 rotates, the lubricating oil 130 is supplied to all parts of the cam groove 101a, reducing the friction of cam follower 103 as it slides. When the lubricating oil 130 reaches the area between the inner surface of the cam groove 101a and the cam follower 103, the impact that occurs between the cam follower 103 and the inner surface of the cam groove 101a when the cam follower 103 reverses is reduced.

A shelf 111 is formed in the upper portion in the cam box 110. Lubricating pipes 107 for supplying the lubricating oil 130 to the slider shafts 102 are supported by a support 112 fixed to this shelf 111. These two lubricating pipes 107 are bent at approximate right angles and their tips 107a are arranged just above the slider shafts 102. The base end 107b of each lubricating pipe 107 is arranged close to the surface of the cam drum 101. In addition, an oil collecting guide 108 is linked to the base end 107b of each of the lubricating pipes 107. The oil collecting guide 108 is bent so as to be arranged along the surface of the cam drum 101.

When the cam drum 101 rotates, the lubricating oil 130 on the surface of the cam drum 101, led by the oil collecting guide 108, flows into each of the lubricating pipes 107 from the base end 107b. The lubricating oil 130 then drips onto each of the slider shafts 102 from the tip 107a of pipe 107. The lubricating oil 130 can thus reduce the sliding friction between the slider 104 and the slider shafts 102.

Around the end of each slider shaft 102 is attached a cylindrical cushion 106, one end of which is closed. These cushions 106 are provided so that the tips of the sliding cylinders 104a, 104a are inserted into the cushions 106 when slider 104 reaches either end of the reciprocating motion, that is, a position at which the sliding slider 104 reverses. When each of the sliding cylinders 104a is inserted into the cushion 106, the lubricating oil 130 supplied from the lubricating pipes 107, 107 to the surface of the slider shafts 102 is in place between the sliding cylinder 104a and the cushion 106, so that the lubricating oil 130 can reduce the shock created when the slider 104 reverses.

Conventionally, the noise generated by the traverse device T is suppressed using such means described above. However, as operation continues, the temperature of the lubricating oil is raised by frictional heat, lowering viscosity and the oil's efficacy as a lubricant, which in turn leads to louder operation. To overcome such problems, this embodiment adopts a means for prevention of overheating of the lubricating oil on the slider shafts 102 by cooling the slider shafts 102.

Concretely, the following constitutions are considered, that is, each slider shaft 102 is formed like a pipe having a hollow 102a and a cooling fluid flows through this hollow 102a. The cooling fluid may he water, the same type of lubricating oil used in the cam box 110, an organic solvent or an inert gas.

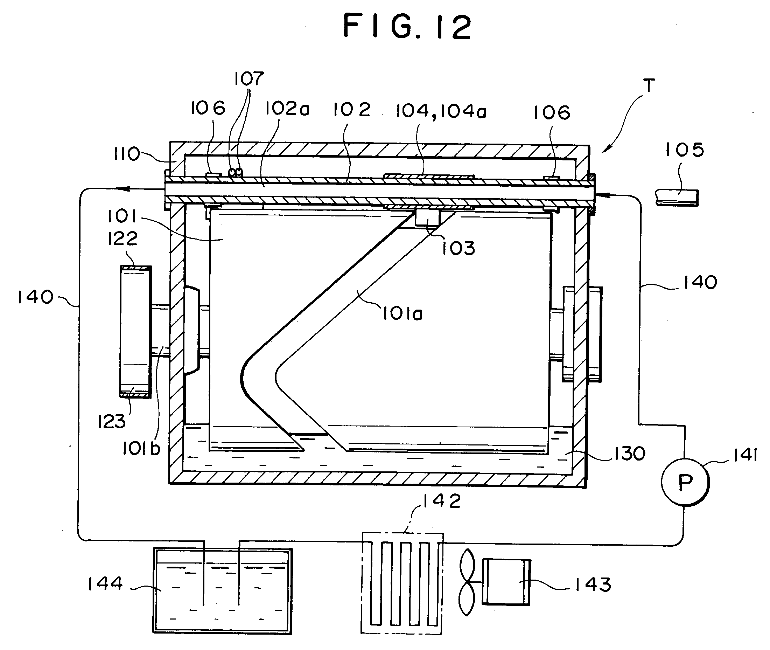

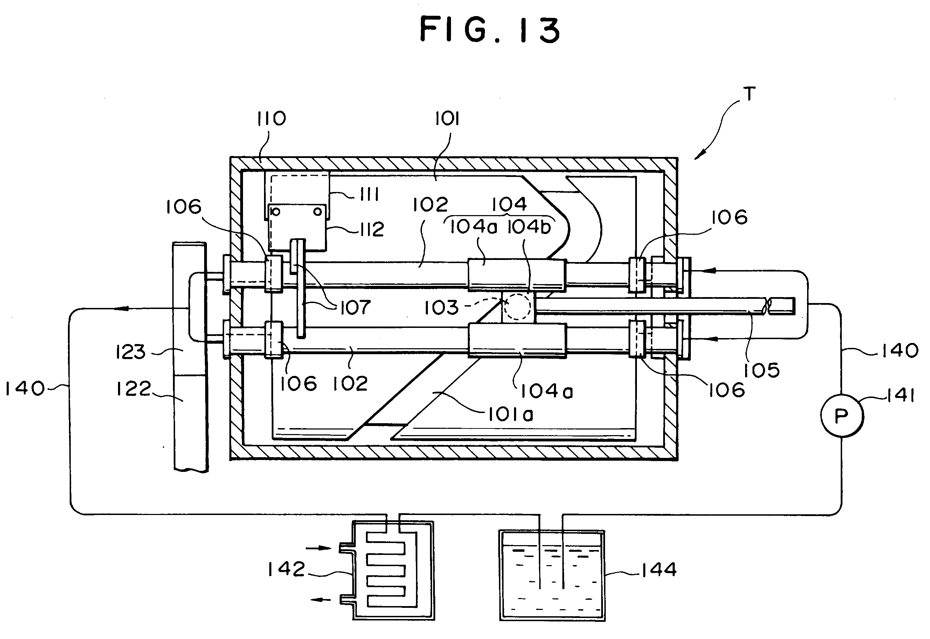

The means for feeding the cooling fluid is provided by a pump 141, a heat radiator 142 for the cooling fluid and a reserve tank 144 for the cooling fluid that are arranged along this circulating passage 140. The circulating passage 140 is connected to the slider shaft 102 to pass the cooling fluid through the hollow 102a of the slider shaft 102, as shown in Figure 12 or Figure 13. In the illustrated embodiment, the two slider shafts 102 are connected to the circulating passage 140 in parallel so that the cooling fluid can simultaneously flow through both the slider shafts 102.

In Figure 12, an air-cooling mechanism is adopted as the heat radiator 142 and the air-cooling mechanism uses a fan 143 to cool the circulating passage 140. In Figure 13, a water-cooling mechanism is adopted to put the circulating passage 140 in contact with a medium such as water.

The cooling fluid fed by the pump 141 in the circulating passage 140 exchanges heat to cool the slider shafts 102 while flowing in the slider shafts 102. Due to such heat change, the heated cooling fluid is cooled in the heat radiator 142, then directed into the reserve tank 144. When the slider shafts 102 are cooled, the temperature of the lubricating oil in contact with the slider shafts 102 is kept from rising. Consequently, the viscosity of the lubricating oil is properly retained and the reciprocating motion of the slider 104 is undisturbed. In addition, the impact of the cam follower 103 in the cam groove 101a can be reduced, significantly reducing the noise from the traverse device T.

The slider shafts 102 can also be cooled through the thermoelectric cooling method, making use of the Perthie effect by using semiconductors built in the slider shafts 102.

In addition, the present invention allows the embodiment to be changed as needed, according to new data.

The following test confirmed that the noise level of the traverse device is reduced by cooling the slider shafts and suppressing an increase in circulating oil temperature. As shown in Figure 13, the circulating passage 140 for cooling fluid is formed for cooling the two slider shafts 102 connected in parallel in the traverse device T. The traverse device T is operated to verify the change in temperature of the circulating oil and the noise generated from the traverse device, which is done by comparing the values obtained before and after water as a cooling fluid flows into the circulating passage 140. The test conditions are, water temperature = about 20 °C and pump flow rate = about 400 ml/min.

At a certain period after the start of operation of traverse device T and before cooling of the slider shafts, the temperatures of slider shafts, cam box and lubricating oil were, respectively, about 80°C, about 65°C and about 70 °C, and the noise level was about 91 dB. However, after cooling of the slider shafts by water, the temperatures of those items declined to about 50 °C, 42°C and 52 °C, and the noise level fell to approximately 85.8 dB. The test result was confirmed, the temperature of the lubricating oil was lowered by about 18°C and the noise level was reduced by about 5.2 dB.

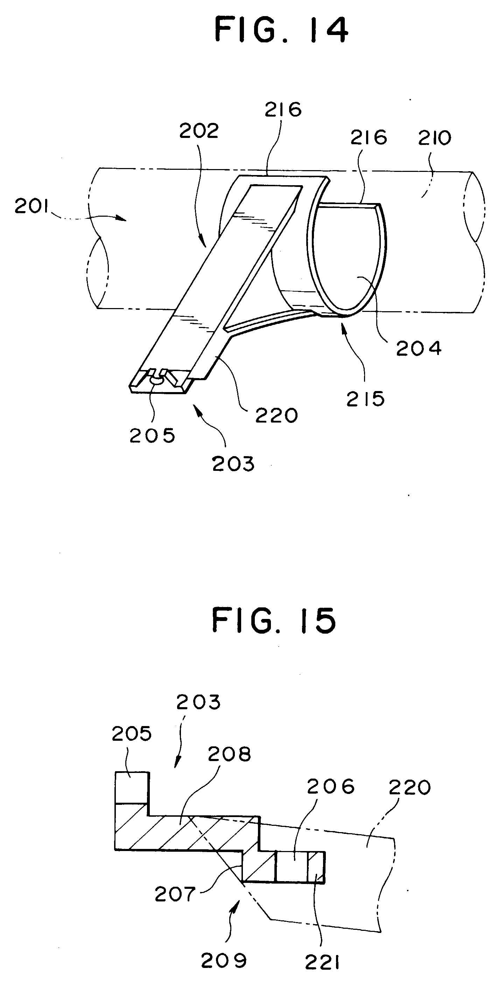

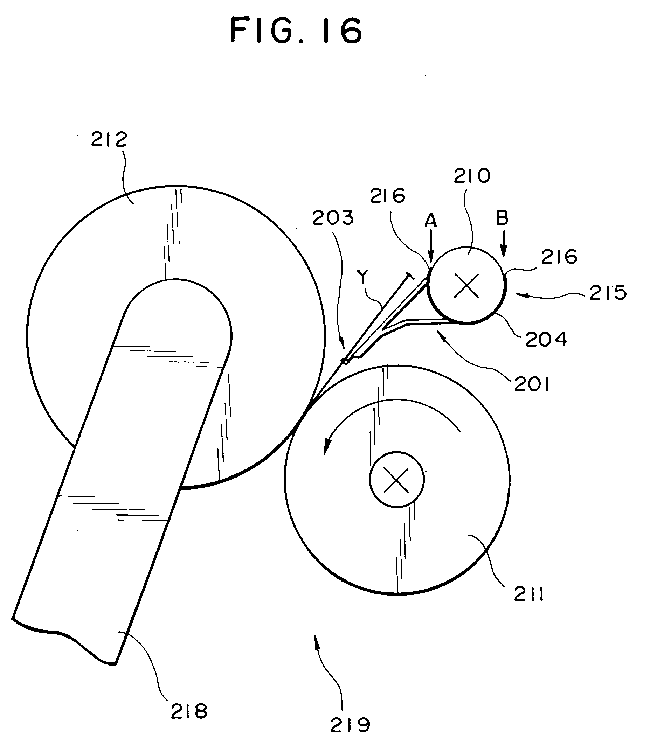

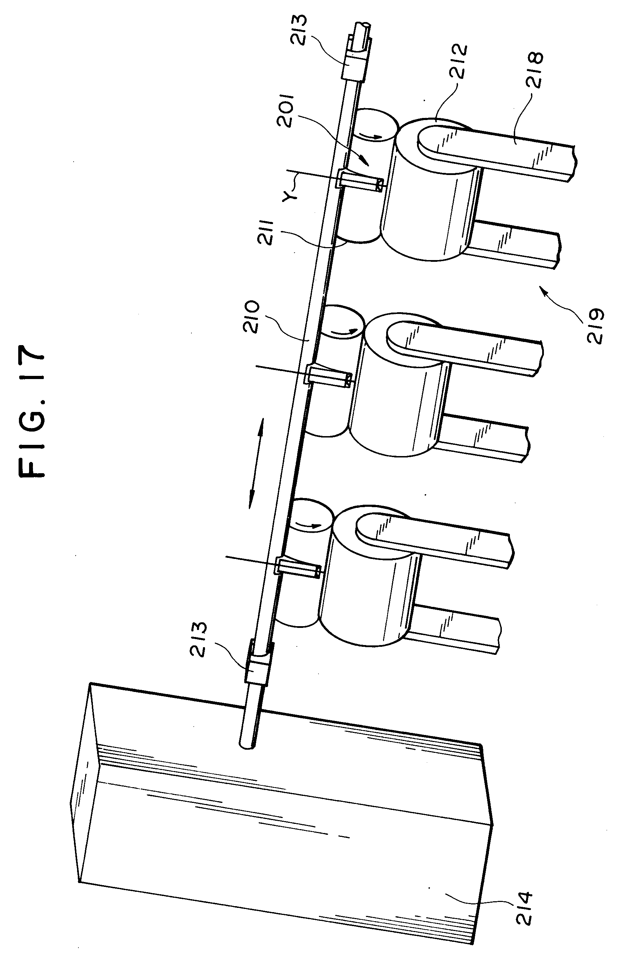

Another embodiment of the present invention will be described with reference to Figures 14 to 17.

In this embodiment, several traverse yarn guides 201 are arranged on the traverse rod 210 and a winding unit 219 is provided at a position corresponding to each of those yarn guides 201. The traverse rod 210 is supported by supports 213 arranged at proper positions and the traverse rod 210 is linked to the driving unit 214 provided at the end of the machine base to enable the reciprocating motion of the traverse rod 210. When the traverse rod 210 begins the reciprocating motion, the yarn guides 201 traverse together. The winding unit 219 comprising a package 212, a friction roller 211 and a cradle arm 218 winds a yarn Y when the friction roller 211 is driven by a driving source (not shown in the drawings) and the package 212 supported by the cradle arm 218 is rotated according to the rotation of the friction roller 211.

The driving unit 214 can be, as one example, a cam box. Inside the driving unit 214, a grooved drum (not shown in the drawings) is provided and this drum rotates to move a follower (not shown in the drawings) in contact with traverse rod 210 along the groove. The movement of the traverse rod 210 is longitudinal ly restricted by the support 213, so the follower repeats reciprocating motions along the support 213, together with the traverse rod 210.

In the following, the yarn guide 201 will be described with reference to Figure 13 and Figure 15.

The yarn guide 201 comprises a supporting member 202 made of resin and a yarn guide member 203 made of ceramics. The yarn guide member 203 is partially embedded in the supporting member 202 so as to be formed as a single body with the supporting member 202. The supporting member 202 comprises an arm 220 and a junction member 215. In profile, the arm 220 is Y-shaped and the center part of the V-letter shape is formed like a plate for reinforcement. The arm 220 is supported by the junction member 215 and provided with the yarn guide member 203 at its tip. The junction member 215 is wider than the arm 220 and its form is a U-shape formd by cutting a part of the ring-like shape, and the inner diameter of the junction member 215 is approximately the same as the diameter of the traverse rod 210 which is a cylindrical pipe. The arm 220 may also be shaped freely if the yarn guide member 203 is appropriately positioned relative to the winding unit 219, and if it is capable of bearing the load of the traverse action.

In the following, the yarn guide member 203 will be described with reference to Figure 14 and Figure 15.

The yarn guide member 203 comprises a yarn guide part 205 guiding the yarn Y, a base part 208 supporting the yarn guide part 205 at its tip and a flat part 221 supported by the trailing edge of base part 208, and a difference in level 207 is formed at the portion where the ceramic base part 208 supports flat part 221. Part of the base part 208, the difference in level (the first separation resistance part) 207 and the flat part 221 are embedded in the arm 220 to form an embedded part 209 so as to be joined to the supporting member 202. The yarn guide part 205 is a convex part with a thickness of about 1mm and its top is open and provided with a circular yarn guide hole. The base part 208 is slightly narrower than the arm 220 and the flat part 221 is as broad as the base part 208. The flat part 221 is also provided with a hole 206. When the flat part 221 is formed as a single body with the supporting member 202, the inside of the hole (second separation resistance part) is filled with resin.

In this embodiment, the size and weight of the yarn guide 201 are reduced by minimizing the shape of yarn guide member 203 and having it serve only as a yarn guide. The yarn guide member 203 is then reinforced by forming it to be formed as a single body with the supporting member 202. Thus, the junction of the yarn guide member 203 is not weakened by the above reduction of the junction area. In addition, the difference in level 207 provided in the embedded part 209 functions as the resistance after being formed as a single body with the supporting member 202 and resin fills and cures in the hole 206, so that the yarn guide member 203 remains attached to the supporting member 202, due to the strong tensile force generated when the traverse rod traverses at a high speed.

Since the yarn guide 201 in this embodiment is bonded to the carbon fiber traverse rod 210, the supporting member 202 is composed of a mixed material of polyamide resin and ABS resin.

ABS resin is light, easily molded and bonds well to carbon fiber. Its selection is especially appropriate because it can use an instant adhesive. However, the ABS resin was found to be inadequate when used by itself. Problems were found in the durability test, that is, the supporting member 202 significantly deteriorated in the space of a month and the supporting member 202 broke around the yarn guide member 203. To overcome these problems, the ABS resin was mixed with polyamide resin to improve the durability of supporting member 202. Although polyamide resin does not bond particularly well to carbon fiber when used independently, its wear resistance and durability are excellent. This final composition gave the yarn guide 201 excellent durability, while maintaining adherence nearly equivalent to ABS resin used by itself.

Below, the method for attaching the traverse yarn guide 201 to the traverse rod 210 in this embodiment will be described with reference to Figure 15.

At first, the traverse rod 210 is positioned as specified by moving the driving unit 214. Then, the yarn guide 201 is set on the traverse rod 210 to align it to the specified position, for example, to come to the end of the package 212. When an instant adhesive drips onto end 216 from adhesive dripping points A and B provided in the upper longitudinal direction of the traverse rod 210, the yarn guide 201 instantly sticks fast to the traverse rod 210.

The clearance between the traverse rod 210 and the junction face 204 should be as small as possible to assure proper adherence. The surface and diameter of the junction face 204 are formed in almost the same shape and size as the traverse rod 210, and the traverse rod 210 is shaped so that both ends of edge 216 are positioned above the center of the traverse rod 210 when the yarn guide 201, after passing the yarn Y through the yarn guide member 203, is set on the traverse rod 210. Then, the yarn guide 201 can be temporaly secured to the traverse rod 210. In addition, the adhesive is allowed to flow into the edge 216 while the position of edge 216 is checked, resulting in significant improvements in workability.

The effects of this embodiment are described below.

For the yarn guide 201 in this embodiment, the supporting member 202 that occupies the greater part of the yarn guide 201 is made of resin to reduce the size and weight of the yarn guide member 203, and joined to the yarn guide 201. As a result, the weight of the yarn guide 201 is reduced to about 1/9 of the original weight without sacrificing strength, permitting quicker yarn winding. In addition, improvements in the shape of portion of the yarn guide member 203 embedded in the supporting member 202 prevent the yarn guide member 203 from separating from the supporting member 202.

Yarn winding speed is significantly improved due to the reduced weight of the yarn guide 201, and the impact sound generated when the traverse rod 210 reverses is significantly reduced. The inertial force generated when the traverse rod 210 reverses is reduced since the weights of both the traverse rod 210 and the yarn guide 201 are reduced. The deflection that occurs between the supporting members 213 of traverse rod 210 is also reduced. With this reduction, the clearance between the traverse rod 210 and the supporting member 213 is reduced, reducing the impact of traverse rod 210 against the supporting member 213. This all but eliminates the impact sound generated by this impact.

The present invention may also be embodied as shown below.

The driving unit 214 driving the traverse rod 210 to produce reciprocating motions is formed as a cam box provided with a grooved drum since it is unrelated to the yarn guide 201 of the present invention. The driving unit 214 is not limited to such a grooved drum, however. It may also use a heart-shaped cam or other meanism to drive the traverse rod 210.

As explained above, the long rod reciprocating apparatus of the present invention can have the following effects.

According to the present invention, vibrations of the reciprocating motion caused by the expansion and contraction of the long rod can be effectively suppressed by a vibration suppressing moans that functions in the reciprocating direction.

According to the present invention, a dynamic vibration absorber corresponding to the long rod natural longitudinal frequency absorbs the expansion and contraction of the long rod reciprocating motion, so that vibrations of the long rod reciprocating motion can be rapidly reduced regardless of the speed of the long rod reciprocating motion.

According to the present invention, the vibration suppressing means is housed in a pipe, minimizing installation space.

According to the present invention, the vibration suppressing means housed in a pipe is divided into two or more parts, reducing the load on each vibration suppressing means and preventing such problems as heat degradation.

According to the present invention, the vibration suppressing means housed in a pipe is divided into two or more parts and each vibration suppressing means is attached to a joint of the pipe, permitting easy attachment of many vibration suppressing means.

According to the present invention, the vibration suppressing means are attached in the free-end section located at the far end of the long rod, where the distortion caused by small vibrations accumulates and the rod expands and contracts most, effectively suppressing the entire vibration of the long rod reciprocating motion.

According to the present invention, such a long rod reciprocating apparatus is used for the traverse device, allowing the reciprocating apparatus to match the high speed motions of the traverse device.

According to the present invention, the lubricating oil in the cam box housing the cam device of the traverse device is kept from overheating in order to maintain proper viscosity, in turn reducing the noise generated during operation of the traverse device.

According to the present invention, when the traverse device is comprised such that the slider shaft is cooled as a means to be reduced the heating of the lubricating oil, the slider that causes the noise and friction is itself directly cooled, and the noise can be effectively reduced.

According to the present invention, the cooling means is formed so that the cooling fluid flows through the slider shafts, preventing dissipation of the cooling fluid.

According to the present invention, the supporting member is made of resin, significantly reducing the weight of the yarn guide and permitting the higher traverse speeds, enable high speed winding. In addition, since the compact yarn guide member is formed as a single body with the supporting member, the yarn guide can be secured even when the yarn guide member fixing area is small. The weight of the yarn guide is thus significantly reduced.

According to the present invention, the separation resistance part in the embedded part serves to further secure the yarn guide member. This further ensures that the yarn guide member does not separate from the supporting member, even when a strong yarn tensile force is applied to the yarn guide member by a high speed traverse motion.

According to the present invention, the use of ABS resin ensures the adherence of the yarn guide to the traverse rod. When the ABS resin is mixed with polyamide resin, yarn guide durability is significantly improved, while the adhering properties of the ABS resin remains relatively unaffected.

## Claims

1. An apparatus for reciprocating a long rod in the axial direction comprising a vibration suppressing means working in the reciprocating direction of the long rod to suppress vibration in the reciprocating direction.

2. An apparatus for reciprocating a long rod in the axial direction as in claim 1, wherein the vibration suppressing means is a dynamic vibration absorber that includes a visco-elastic body expanding and contracting in the reciprocating direction and a weight attached to the visco-elastic body.

3. An apparatus for reciprocating a long rod in the axial direction as in claim 1 or claim 2, wherein said long rod is a hollow pipe and wherein the vibration suppressing means is housed in said pipe having a hollow.

4. An apparatus for reciprocating a long rod in the axial direction as in claim 3, wherein the vibration suppressing means is housed in the hollow pipe and the vibration suppressing means is separated into two or more parts.

5. An apparatus for reciprocating a long rod in the axial direction as in claim 4, wherein each of the vibration suppressing means is attached to a joint member of a joint of the long rod.

6. An apparatus for reciprocating a long rod in the axial direction as in any one of claims 1 to 5, wherein the long rod has, at its far end, a free and and the vibration suppressing means is attached to this free-end side.

7. An apparatus for reciprocating a long rod in the axial direction as in any one of claims 1 to 6, wherein the reciprocating apparatus is a traverse device and wherein this traverse device reciprocates the long rod that connects its bese end to a cam box and is provided with several yarn guides, so that said traverse device can form several packages at a time.

8. An apparatus for reciprocating a long rod in the axial direction having a cam device including a cam follower engaged with a cam drum, a slider attached to the cam follower and the slider being connected to the long rod that has a number of yarn guides, and reciprocating the slider along a slider shaft by rotating the cam drum and reciprocating the long rod, comprising a means for preventing a lubricating oil, contained in a cam box housing the cam device, from overheating.

9. An apparatus for reciprocating a long rod in the axial direction as in claim 8, wherein a cooling means for lubricating oil that comes into contact with the slider shaft is prpvided.

10. An apparatus for reciprocating a long rod in the axial direction as in claim 9, wherein the cooling means for lubricating oil is formed so as to flow a cooling fluid through the inside of the slider shaft.

11. An apparatus for reciprocating a long rod that has a number of yarn guides to traverse a number of yarn at the same time, wherein each of these yarn guides comprises a supporting member made of resin and a yarn guide member formed as a single body with this supporting member.

12. An apparatus for reciprocating a long rod as in claim 11, wherein the yarn guide member is partially embedded in the supporting member so that the yarn guide member is formed as a single body with the supporting member and a separation resistance part is provided for the yarn guide member, embedded in the supporting member, the separation resistance part preventing the yarn guide member from separating from the supporting member.

13. An apparatus for reciprocating a long rod as in claim 11 or claim 12, wherein the supporting member is made of a material containing both ABS resin and polyamide resin.
